# EUROPEAN PATENT SPECIFICATION

(11) **EP 0 958 550 B1**
(45) Date of publication and mention of the grant of the patent: **08.01.2003**
(21) Application number: 96916414.4
(22) Date of filing: 24.05.1996
(51) Int. Cl.: G07B 15/00

(54) **A DEVICE AND A SYSTEM, CARRIED BY A VEHICLE, FOR REMOTE COMMUNICATION IN AN ESTABLISHMENT**
EINE IN EINEM FAHRZEUG ANGEORDNETE VORRICHTUNG UND SYSTEM ZUR FERNÜBERTRAGUNG IN EINER ANLAGE
DISPOSITIF ET SYSTEME EMBARQUES, DESTINES A LA TELEGESTION AU SEIN D'UNE INFRASTRUCTURE

(30) Priority: 30.05.1995 SE 9501972; 15.12.1995 SE 9504532
(43) Date of publication of application: 24.11.1999
(73) Proprietor: COMBITECH TRAFFIC SYSTEMS AB, 551 10 Jönköping (SE)
(72) Inventor: MOSTRÖM, Thomas, S-554 54 Jönköping (SE)
(74) Representative: Bergquist, Kjell Gunnar
(86) International application number: SE9600677
(87) International publication number: WO96038819

(56) References cited:
- EP-A- 0 401 192
- WO-A-92/08210
- US-A- 5 310 999

## Description

### TECHNICAL FIELD:

The invention relates to a vehicle mounted device and system for remote communication in traffic check installations, such as for collecting road tolls and parking charges using radio waves.

### STATE OF THE ART:

From for example US, A, 4 303 904, Chasek, a system for debiting charges in a road toll by means of remote communication is known. The system comprises both stationary radio transmitter-receiver-eguipment in the road tolls and units carried by the vehicles. The radio waves transmitted from the radio equipment of the toll, mostly micro waves, are received by a transponder in the respective vehicle unit, which moreover is provided with data processing equipment having an associated memory. By means of the system charging operations can be carried out using remote communication without the vehicles having to stop. During the communication identification information, messages regarding the state of charging and debiting of the charge either from an account, which is identified by the vehicle unit or by this being programmed with a prepaid balance, which is stored in its memory and from which the charge is subtracted, are exchanged by means of transmission from the radio equipment in the toll and retransmission in a modulated form from the transponder.

The corresponding system is also used for checking public transport, the stationary equipment then being located at certain checkpoints, and for access control of transportation vehicles at the passages thereof into and out from loading and unloading places. Also applications for collecting parking charges are possible. Thus, the equipment in itself is all round and it is possible to adjust and program it for different purposes.

As has been mentioned, the system relies on the vehicle unit being provided with a transponder for the receiving and retransmitting radio signals, a data processing unit for carrying out operations based on received signals and for modulation of the retransmitted signal-. Moreover, the data processing unit has a memory with a program for control of the signal generation, what often comprises encryption and decryption and containing certain identification data. In the system this is the minimum equipment which is required in the vehicles for the function of the system. In systems, for example road tolls systems, which are intended for payment operations, this equipment is sometimes also supplemented with storage capacity for data concerning a prepaid balance, from which the charges can be deducted.

However, wishes for additional functions have emerged, which are not comprised within the capacity of the described unit. In a system where payment operations occur often there is a wish that it should be possible to enter a prepaid balance by means of a so called intelligent card, which can be removed from the vehicle equipment and be brought along separately for charging a new balance in for example an automatic machine arranged therefor. The separation possibility also results in that several users can use the vehicle unit, each with his/her personal card and also the proneness of theft is reduced since the system can be designed so that it will not be possible to use the vehicle unit in the case where the card is separated. Other wishes for functions are the possibilities to be able to read, in a character window of the vehicle unit, data such as the remaining balance, debited charges and also traffic checking information and traffic information, which is supplied when passing a toll or a check.

With the exception of vehicle charges in the form of road charges there is a need for collecting charges for parking inside traffic intense areas, such as inner cities. It also occurs that one in order to limit the entrance to and the traffic in such areas collects a charge for staying in the area, which charge can be based on time. It has then been proposed, see for example WO 90/15401 (Hunter et al.) and WO 95/08162 (Olsson), that also such charges are registered by means of communication via radio waves. In this manner one could facilitate the charge collection for the vehicle driver as well as for the inspectors, which generally must be present for watching the observance of parking regulations and other rules. Since most vehicles, which are used for transportation in areas where road tolls have been placed, are provided with remote communication equipment it would be desirable that this also could be used for other charges, such as has been mentioned parking charges and other possible charges for staying in areas of intense traffic. This would provide many advantages in relation to the alternative, to the conventional system in the form of stationary parking meters having timers or tickets, which have been marketed in the shape of p-boxes, which are arranged to count down time and proportionally thereto register a charge, and which can be checked from the outside through the car window.

To satisfy the basic functions of the vehicle unit and at the same time to give it certain additional functions has proved to lead to solutions not entirely satisfying in all regards. The basic function to provide the outer communication by means of the transponder is best implemented by means a well exposed location inside the vehicle, whereas the additional functions often lead to a wish for a primarily user friendly location. It has proved to be difficult to satisfy these two opposing wishes by means of the solutions devised up to now in the form of units for a large number of functions. Moreover, there is a great risk that the requirements and systems will be changed, so that new technique and equipment must be added, which in a unit having many integrated functions results in that the entire unit must be exchanged.

Decisions on implementations of different types of charges and how these shall be collected and thereby the equipment which the vehicle driver needs to acquire, are political decisions. Such must many times be made in stages. That toll charges are collected for transportation along certain roads is established in many places. One has then accepted that a debiting system with remote communication is installed. However, the conventional systems with parking meters, sometime supplemented with p-boxes, have not at all in general been replaced by more developed charging systems comprising remote communication and regarding staying inside traffic intense areas the development has hardly come longer then arranging entrance tolls, which in their function in general can be regarded as equivalent to road tolls.

If integrated systems are to be created, these conditions result in that one demands that these can have a successive extension from a basic apparatus generally only designed for sending an identity to a toll station which one passes, to complete systems with debiting via prepaid smart cards and within all types of charging systems. It is then desirable that the basic equipment and the equipment in the different expansion stages both shall be as simple, that the initial outlay does not become unnecessarily burdening and yet shall be able to allow a supplementary addition and extension, so that a total exchange of the equipment must not take place in pace with the successive extension. Said political-organisational circumstances hence create a need to technically develop apparatus which in is its basic form is simple and as little cost demanding as possible, but yet allowing extension to more and more advanced forms without discarding earlier acquired equipment.

Document EP 401 192 shows a vehicle carried device with a transponder being located inside the windshield.

### DESCRIPTION OF THE INVENTION

The object of the invention is to provide a system architecture, which allows extension in several stages from a simple communication equipment for the debiting of vehicle charges at a lower cost in particular for the vehicle unit as primary aim, to an all round system where possibilities of debiting and paying processes for different cases of charging exist, aiming at providing an all round equipment, which can be used in a complicated infrastructure. It shall be possible to carry out such an extension of the system mainly only by supplementing the simplest equipment with components and without wasting investments caused by an exchange of components.

According to the invention a fulfilment of said wishes is obtained by means of a vehicle mounted communication and service device, which also after installation can be adapted to a number of additional functions. This is obtained by a first unit being reserved for the basic functions and a second unit being provided for the additional functions, which to some extent have, in relation to each other, a free location in the vehicle by being connected through an internal communication link arranged for the purpose.

### DESCRIPTION OF THE DRAWINGS

In the following an embodiment of the invention with certain variants is described. It is then referred to the accompanying drawings of which in
- Fig. 1: the interior around the driver seat in a vehicle, of the type passenger car, having the contours of the interior shown by means of dotted lines in a section of the vehicle in its longitudinal direction, is shown, the device according to the invention being shown with solid lines;
- Fig. 2: in the same manner the driver seat of the vehicle and the device according to the invention are shown, but here in a view from the inside against the wind shield of the vehicle,
- Fig. 3: a block diagram of a unit associated with the device and in the following called communication unit is shown, and
- Fig. 4: a block diagram of a second unit of the device and in the following called the service unit is shown.
- Figs. 5, 6, 7, 8: show the invention as a system in successively more extensive expansion generations.

### PREFERRED EMBODIMENT

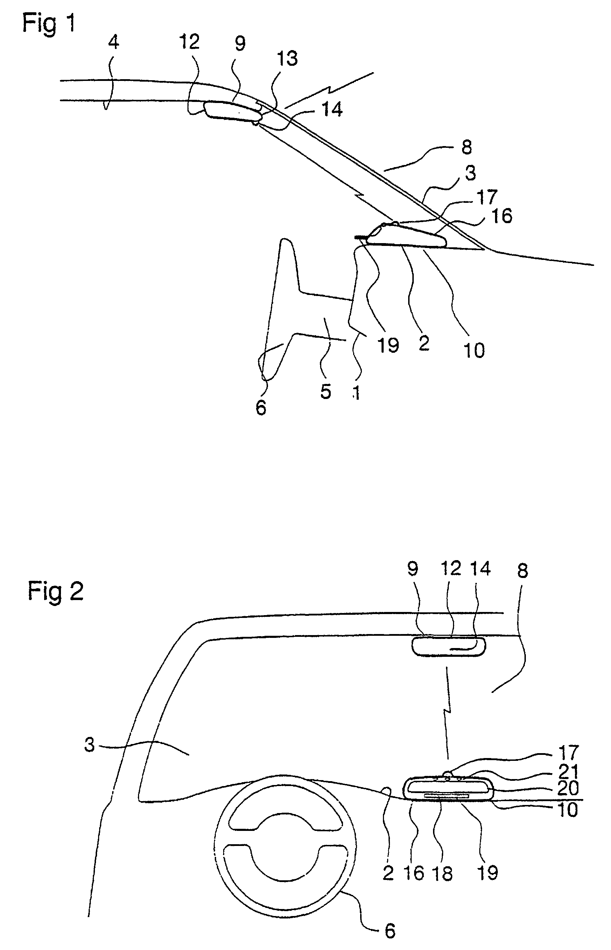

In Fig. 1 the interior at the driver seat in a vehicle, of the type passenger car, is shown from the side. The front panel of the vehicle where the instrumentation is located is then denoted 1. The panel continues via a horizontal surface 2 to a bracket for the windshield 3, which ends next to the inner roof 4 of the vehicle. From the front panel 1 a steering wheel hub 5, which carries a steering wheel 6, extends backwards. The device according to the invention, which taken as one unit is denoted 8, consists of two units, one communication unit 9 and one service unit 10. The communication unit 9 is suspended next to the upper edge of the windshield 3, where this continues to the inner roof 4. The service unit is located on the horizontal surface 2 of the front panel. The two units 9 and 10 are fixed by means of means, not shown here, which can be arranged for fixing by means of screws, adhesive glue or in another manner.

Fig. 2 shows the same equipment as Fig.1 and the same reference numbers are used. In Fig. 2 it is clear that the units 5 and 10 are located approximately in the centre of the vehicle, however the service unit 10 being a little displaced somewhat closer to the steering wheel 6.

In the arrangement shown, the communication unit has an advantageous location for remote communication, and does not interfere with the driver's view. As to the service unit is located inside a comfortable operating and viewing distance for the driver.

The communication unit 9 is designed with an enclosure 12 from which a window for a transponder 13 extends and from which an internal connection 14 extends. The term transponder means a passive electronic communication device for the reception of radio waves modulated to carry a signal, and retransmission of the radio signal in a remodulated form for carrying a response message, which is stored in a- control part included in the transponder. The service unit 10 has, in the embodiment shown, also an enclosure 16 and an internal connection 17 for internal communication with the unit 9 via its connection 14. Moreover, it can be provided with a plug-in slot of a reader 18 for an intelligent card 19 (smart card), and with a character window 20 and with a keypad 21. Inside the plug-in slot 18 means are provided for connection via a contact or touch free of the intelligent card 19, which can be handled separately after being pulled out.

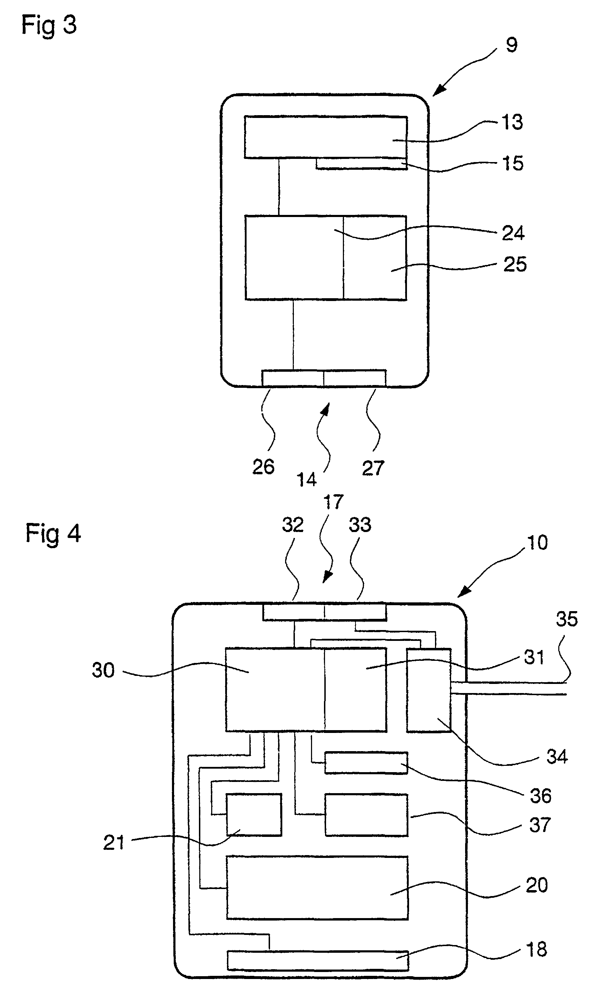

In Fig. 3 a block diagram of the functional parts of the communication unit 9 is shown. Then the two units for outer communication, the transponder 13 including its control part 15 for generation for said response message and the internal connection 14 appear. This is the smallest equipment, which is required, for the communication function and for the system extension, to which the invention relates.

In addition to said minimum equipment the communication unit 9 suitably comprises a data processing unit 24 having a memory 25. With this total equipment the communication unit can be made to operate independently for carrying out a payment operation. It is also clear from Fig. 3 that also the internal connection 14 is divided into two units, one signal transmission unit 26 and one power supply unit 27. Both of the units as well as the transponder 13 are connected to the data processing unit 24 which in turn is connected to the memory 25. Since the system extension according to the invention provides a possibility of communication via the signal transmission unit 26 with one or more separate service units the communication unit must be arranged for a corresponding data processing in the internal communication. Thus, the unit 24 having the memory 25 or in said minimum embodiment, the control part 15 of the transponder shall be arranged for such data processing.

In Fig. 4 the functional parts of the service unit 10 appear in the same manner. These are the units, which are directed outwards, the internal communication connection terminal 17, the connection terminal for the intelligent card 18, the character window 20 and the keypad 21.

In the service unit also a data processing unit 30 is provided having a memory 31. The internal connection terminal 17 is also here divided into two units, in a signal transmission unit 32 and a power supply unit 33. The signal transmission unit 32 is connected to the data processing unit 30, which is arranged for internal communication with the unit 9 according to a common signal transmission protocol. The power supply unit 33 is connected to a power source via a receiving unit 34 and a cable 35, which is suitably connected to the electrical system of the vehicle. The receiving unit 34 also supplies current to the data processing unit and as has been mentioned the power supply unit 33 either directly or via the data processing unit. As appears all the above mentioned external units, the card connection terminal 18, the window 20 and the keypad 21 are connected to the data processing unit 30 and also a timer unit 36 can be connected thereto. The latter is suitably arranged for counting down time from start and provided with a clocking function. Moreover, the service unit can be arranged to be provided with a means 37, which senses if the vehicle is in movement or not. In addition, indication lamps can be arranged for particular signalling or alarm.

In the following the function of the device will be described in an extension form thereof for payment of charges in a traffic context.

The two units 9 and 10 are assumed to be mounted as shown i Fig. 1 and 2, the service unit being connected to a power supply by means of the cable 35. An intelligent card is assumed to be connected to the connection place 18 and is thus connected to the data processing unit 30 in the unit 10. The card is assumed to have a balance corresponding to a certain amount of money stored in it. The card is arranged so that this balance can be reduced by means of impulses from the data processing unit 30 when the card is connected thereto via the connection place 18. Moreover, the card and the data processing unit are arranged to communicate with each other via encrypted signals for calculating said balance and for identification and possibly also input of operation data into the memory of the card.

The communication unit 9 is also assumed to be supplied with power, this being accomplished through the units 27 and 33 of the power supply link, so that electric energy fed through the cable 35 can be transferred to the unit 9.

The device is now ready to be used for a paying operation in a road toll. At entrance in the road toll the device is "awakened" by a signal from the transmission equipment of the road toll, which is received by the transponder 13, which is located in a ideal position therefor inside of and next to the upper side of the windshield 3. The signal to the transponder is forwarded to the data processing unit 24 and from the memory 25 therein, a signal carrying modulation is generated by the received signal, which is retransmitted to the radio receiver unit of the toll from the transponder 13. Hereby the vehicle installation is identified and the paying operation can start. During at least some part of the operation the two units 9 and 10 cooperate and then exchange signals via the signal link comprising the units 26 and 32. This results in a preferably encrypted signal flow, ending in that from the prepaid balance of the card the charge calculated in the toll is reduced, and some data concerning the operation, such as time, the identification of the toll can be read into the memory of the card in order to be printed if this is desired in a particular installation. Also, such information can be presented in the character window 20. It can then be particularly important that the remaining balance on the card is presented, so that there is a possibility of judging whether it is enough for additional payment operations.

The card can be personal so that debiting can be directed selectively from the same unit by choosing a card. It is suitable that the service unit is arranged to store a limited balance transferred from the card, which then can be taken away as a protection against theft and abuse, what is particularly important when the vehicle is parked.

It is also possible to use the device for payment of parking charges. This is also carried out by the charges being counted down after start by means of operating the keypad 21 and setting of the parking charge by the device that the timer unit 36 subtracts used time which in the data processing unit 30 is transformed to the charge, which is to be deducted from the balance of the card. In the character window it can appear that the parking functions are started in a correct manner, so that this can be watched from the outside by a parking inspector.

If the inspector is provided with a portable transmitter and receiver equipment, complete information from the vehicle unit can be collected in a rational manner. The identity of the unit and its possession of the vehicle can then be checked, which eliminates the theft motive and tampering is made more difficult to a high degree.

By the fact that the device also comprises a remote communication unit, which as described is used in road tolls which are arranged for remote communication, also the parking function can be remote controlled. Hence, one can eliminate the personal surveillance including inspection of each vehicle at periodic intervals by means of a remote surveillance via the transponder 13, which to a transmitter-receiver can give information of the present parking status. In certain areas or buildings reserved for parking the debiting of the parking charge can be started at entrance and stopped at the exit with debiting of a charged fee from the balance via the transponder.

As an alternative the parking amount of money can be stored in the memory of the vehicle unit and charged later at a following toll passage.

In the description of the exemplifying embodiment it has been assumed that the communication link to the units 26 and 32 shall be wireless. One can then use transmission by means of infra light for example, by means of a coding in the respective data processing units. Also the power supply via the units 33 and 27 to the unit 9 can possibly be wireless. This can then be carried out locating a current generating photo-cell in the unit 27 and a corresponding light source in the unit 33. As an alternative one can use other energy transmitting media such as magnetic waves.

In wireless transmission of signals as well as energy for the operation a completely free location of the units in relation to each other inside a certain frame of space is obtained. However, it shall not be excluded that the unit 9 can have its own power supply either through a battery or through a connection of its own to the electric system of the vehicle. The signal transmission can also be through wires, the units 26 and 32 being connected via a cable, which also can be arranged for supply of current to the unit 9. Irrespective of how the transfer is carried out the internal communication units 14 and 17 should be seen as interfaces for connection of the two units to each other.

By the fact that the equipment which is required for remote communication is located inside and is limited to the communication unit 9, it can be combined with different embodiments of the service unit, whereby the communication unit can have a wide use in a standard embodiment. This has been exemplified by mentioning the embodiment of the service unit for charge payment in road tolls as well as in parking. In this system the units can also co-operate for presentation of road information, which is transmitted by road tolls or from certain check points. This can then be presented in the character window and can become easily visible for the driver through the free location of the service unit. The unit is also easily accessible for operation by means of the keypad during driving. Other fields of use for which the service unit can be adapted have been mentioned in the introduction.

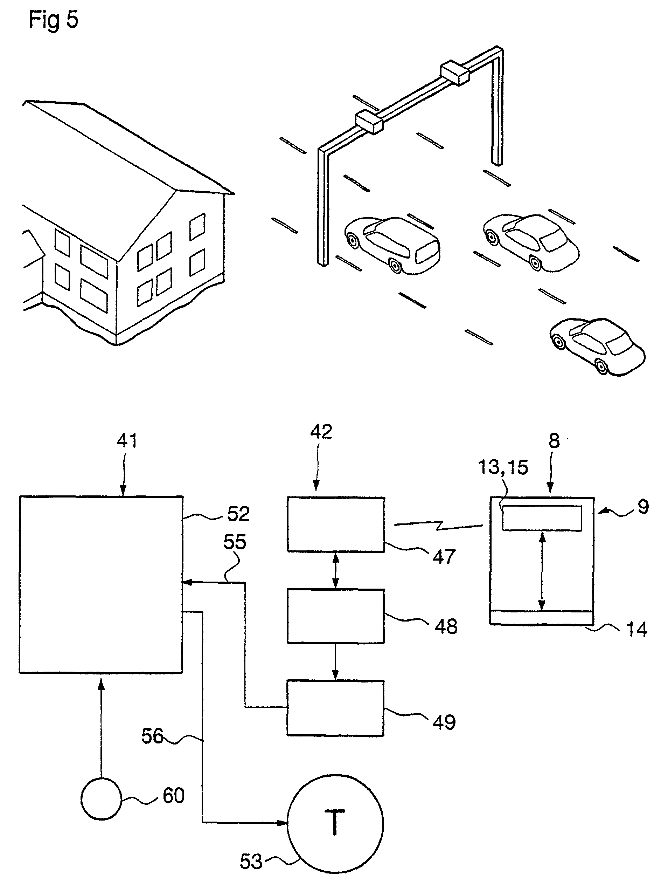

These possibilities of extension are schematically illustrated in figures 5-8. These are each divided into three columns. In the left column symbols for a subsystem for the handling of charging flows, in the following called the charging system 41, are shown.

In the middle column symbols for stationary communication equipment, which can be located in road tolls, area tolls or in parking places and wherever one wishes to charge vehicle charges at passage are shown. This subsystem is in the following called the stationary installation 42. In the right column symbols for the subsystem, which is carried by the respective vehicle, thus the vehicle equipment 8, is shown, see Figs. 1 and 2. The character of said subsystems are symbolised in the upper part of the columns for the charging system 41 of a building, for the stationary installation 42 of a road toll located over a road way and for the vehicle equipment 8 of a passenger car.

In the simplest embodiment, the first generation according to Fig. 5, the vehicle equipment 8 only consists of the communication unit 9 in its described minimum embodiment with the transponder 13 including the control part 15. This is as has been mentioned a passive receiver-transmitter, which after initiation by means of a micro-wave radio signal can retransmit a definite, encoded message. This message is assumed to be an identity, which can be the registration number of the vehicle in which the communication unit is mounted or an identity assigned to the vehicle equipment itself. The stationary installation consists of an antenna unit 47 for microwave communication with the transponder 13, a computer 48 for the processing of incoming signals and generation of outgoing signals, and a communication unit 49, which is controlled from the computer 48 to transmit information preferably via a wire, to the paying unit, which in this generation is denoted 52. The information received by the paying unit 52 is used for debiting the charge in question, see the symbol 55, to the one, which is to pay the charges that are associated with the identity in question. Payment for debiting made, the symbol 60, is paid to the paying unit 52. Paid means can then be forwarded from the paying unit to the one, which is to benefit from the collected traffic charges, see the arrow 56.

This, the simplest system makes it possible, that the one who has been given a payment identity can be debited the charges, which successively are charged when passing the stationary installation. Thus, payment is made afterwards based on the information of toll passages of the identity carrier in question. The vehicle equipment 8, thus only consisting of the communication unit, does not allow for any checking data to be stored therein at a passage. A checking of the person liable for payment can therefore only be made afterwards based on charging verifications. This system embodiment does not allow the maintaining of anonymity of the carrier of the identity; this must as a physical or legal person be possible to find for collection of charges.

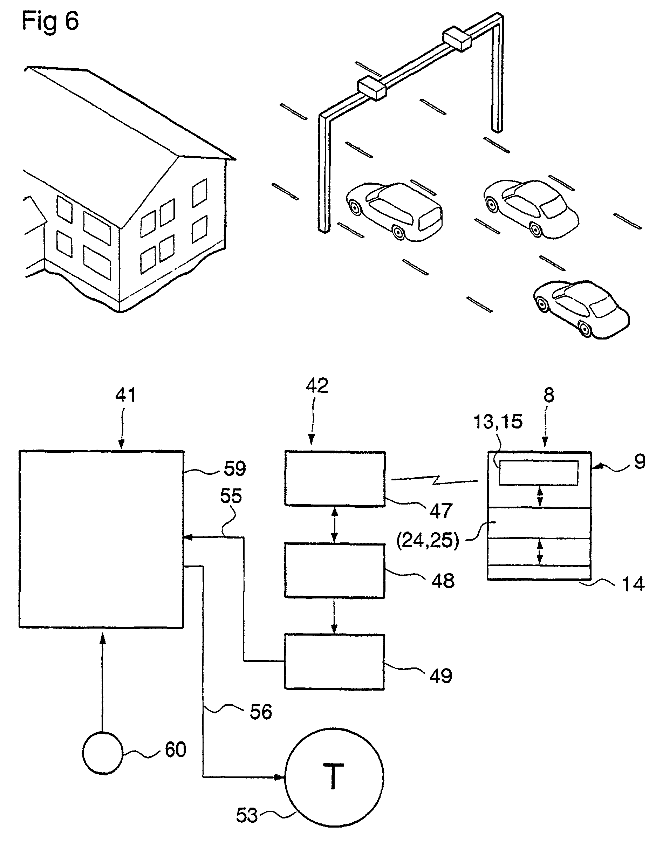

The embodiment of the system according to Fig. 6 has in the vehicle, except for a communication unit 9 having a transponder 13, the described data processing unit 24 comprising the memory unit 25 connected thereto. In the memory data representing a certain amount of money can be stored. The storing of this sum can be carried out by means of a code message transmitted from the stationary installation 42 via the transponder 13. The amount, which is transferred in this manner, is collected from a sum electronically stored in the stationary installation. This has in its turn been transferred from the payment unit, here 59, via the communication unit 9 and then represents a payment made by the person having the identity in question and the corresponding vehicle unit, see the symbol 60.

The payment sequence then becomes the following:
The owner of the identity pays a sum to the payment unit 59 designating an account connected to the identity. Said amount is transferred to the stationary installation and is stored here related to the identity in question.

Since this system embodiment shall enable anonymity, which is regarded as desirable, the paid amount can not be allowed to be exceeded. An amount corresponding to the charge must be available or otherwise it must be indicated to the vehicle that payment must be made manually and if this does not happen the identity of the vehicle must be registered for charging afterwards.

For example, in a high way road toll the passage can take place very quickly at the same time as the antenna system 47 of the toll bust be designed having a limited range in order that not too many moving vehicles will be picked up at the same time. This results in that the time for the payment operation becomes very short for a high velocity of the vehicles. The time period can therefore become too small to make it possible for a particular account among many other stored accounts, to be sought for and checked, so that in occurring cases the stop indication or the registration respectively can be carried out. Therefore, it is preferred that, in a passage, data for an amount, which at least is sufficient for the charge, which can be expected, is stored in the memory 25 of the vehicle unit via the transmitter of the stationary unit. When such storing has taken place the payment operation can be carried out so that the stationary unit in the radio communication with the transponder 13 collects data for checking whether a sufficient amount is available in the memory 25. This check can take place in immediate connection to the collection of the identity and can be included in the time period, which is available. The charge can then be reduced from the balance stored via the payment unit and after the vehicle has passed. If the balance reaches such a low amount, that the foreseen minimum amount is not sufficient to correspond to the chosen minimum amount which shall assure the charge payment, a command is connected to the identity, via the transponder to the memory unit 25, to deduct means for the charge from its balance, the stationary unit checking the remaining balance. If this turns out not to correspond to the minimum amount for payment of a passage charge the identity in question is blocked, so that a free passage will not be permitted at the next occasion. Suitably, the memory unit 25 is provided with some kind of indication devices, for example by means of light, indicating that the paid balance is no longer sufficient.

In this system embodiment a certain anonymity can be maintained, the account does not need to be connected to an identified owner in transactions. It should however not be possible in the system to let the owner of a vehicle equipment be anonymous, since in such a case it would not be possible to check whether the possession is legitimate. Thus, there is a leak of anonymity owing to the fact that the account is connected to the identity of the vehicle equipment and that its owner in turn is registered somewhere, one can assume.

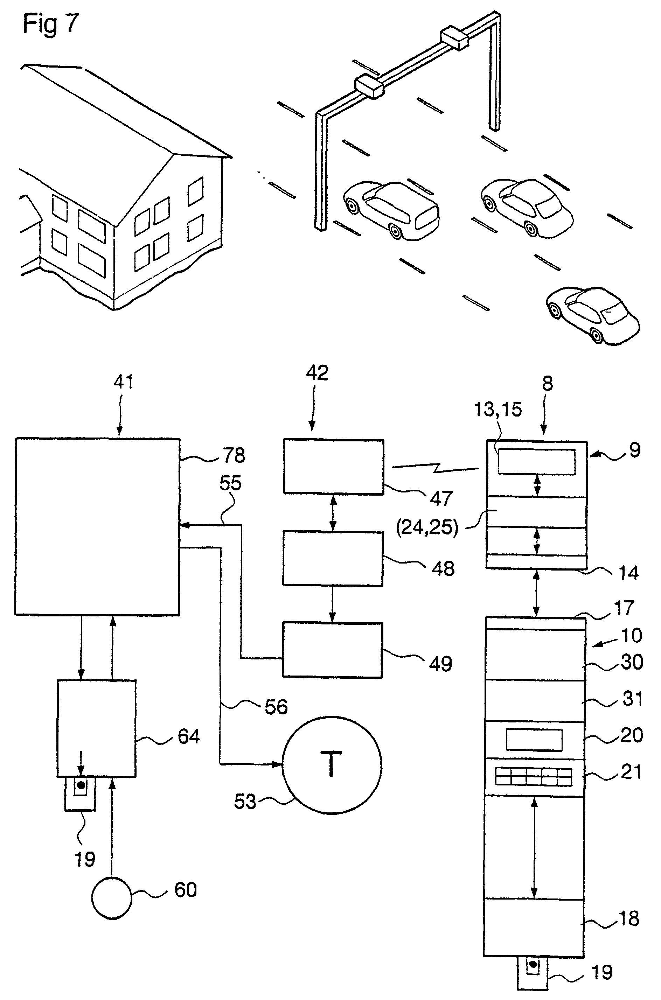

In the system embodiment according to Fig. 7, however, a complete anonymity can by maintained. This is provided by the vehicle equipment further being equipped with the described service unit 10 having the reader 18 for smart cards (compare 19 in Figs. 1, 2). The card is provided with a memory and a data processing unit. Hereby the card can be loaded with data corresponding to a certain balance in a loading unit 64 by means of payment of corresponding money means, see the symbol at 60. This results in that the card becomes a carrier of "electronic money", which via the card reader 18 and the rest of the equipment, can be transferred to the stationary installation 42 via radio communication. Such a transfer thus results in that the balance in the card is reduced. It is suitable that the vehicle equipment is provided with a display unit, which in the character window 20 can display the remaining balance, so that a reloading of the balance can be initiated.

As has been mentioned the time for the payment operation in the toll is often short, so that more comprehensive information can not be exchanged. Since a certain time is required for collecting an amount from the smart card the equipment is suitably so arranged that a buffer amount is entered in the memory 31 from the card reader, which is immediately available at the communication occasion. The rest of this buffer amount after a debiting operation can then after the passage be replenished to a preset level.

Amounts 60 paid via the loading unit 64 are supplied to the payment unit, here 78, in order to be distributed to the selected payment receiver according to information transmitted from the stationary installation regarding where the passages have taken place. These charges do not need to be associated with a person identity and therefore a good anonymity can be maintained.

It should be added that if the same vehicle equipment with smart card is used in passage locations having payment receivers different from each other the payment unit 78 shall be equipped with a corresponding number of accounts which are credited according to the payment receiver, which is entitled to collect charges from the respective stationary installations.

All system embodiments, which have now have been described, are arranged for the collection of charges in the passage of an stationary installation, a passage which results in that one drives into and thereupon uses a section of a road. Stationary installations can also be arranged at exits from a toll road. One can thereby moderate the road toll according to the length of the part of the road, which is used between the entrance location and the exit location according to the length of the part of the road in relation to the total distance that is subject to a charge. In such toll installations communication between the stationary installation and the vehicle unit must take place in two stages, first at the entrance and then at the exit. The final charge shall then be determined at the exit since it is not until then one can determine the part which has been used. This can be carried out by means of different kinds of operation sequences. In one such a type a minimum charge is charged at the entrance corresponding to the shortest section to the first exit location and then additional charges are charged in the case where the exit takes place at some exit location located further away.

As has been mentioned in the introduction vehicle charges can however occur, which are related to other situations than a ride along a certain road section. It has then been mentioned that there is also an interest for collecting charges by means of remote communication for staying inside traffic intense areas. In the simplest case entrance tolls are arranged and a predetermined charge is collected at entrance. However, this system will in an unfair way burden those who drive into charging zone and only use its traffic system during a short time in relation to those who may perhaps stay in the zone during a long time of perhaps several days. It has therefore been suggested that the charge also is to be made dependent on the time for staying in the zone.

However, in general the conditions are complicated since the staying in the zone can include
- that one drives around in the zone;
- that one is unintentionally delayed by a stop due to the traffic situation, road work or other circumstances outside the driver's control;
- that one has parked the vehicle in a charged parking place and pays a charge therefor, or
- that one has the vehicle parked in a place, which is not part of the charged system, for example one's own garage place.

Since the collection of a traffic charge inside heavy traffic areas is not only to be a financing means but also a way of limiting the staying inside the zone, of reducing "unnecessary driving", it would be logic to charge the time for driving inside the zone most, whereas parking on a charged parking place is paid through the system for collecting parking charges. It is reasonable however that parking in one's own place is not charged at all, but however the driving from the zone border to and from the parking place. One can also be of the opinion that the time for unintentional stops shall not form a base of charging.

As has appeared a pure entrance charge to zones loaded with heavy traffic is an insensitive instrument in the complicated conditions which in general are present, and provide small possibilities of charging in relation to the degree in which the traffic system is used and which provides insufficient possibilities for controlling the traffic behaviour.

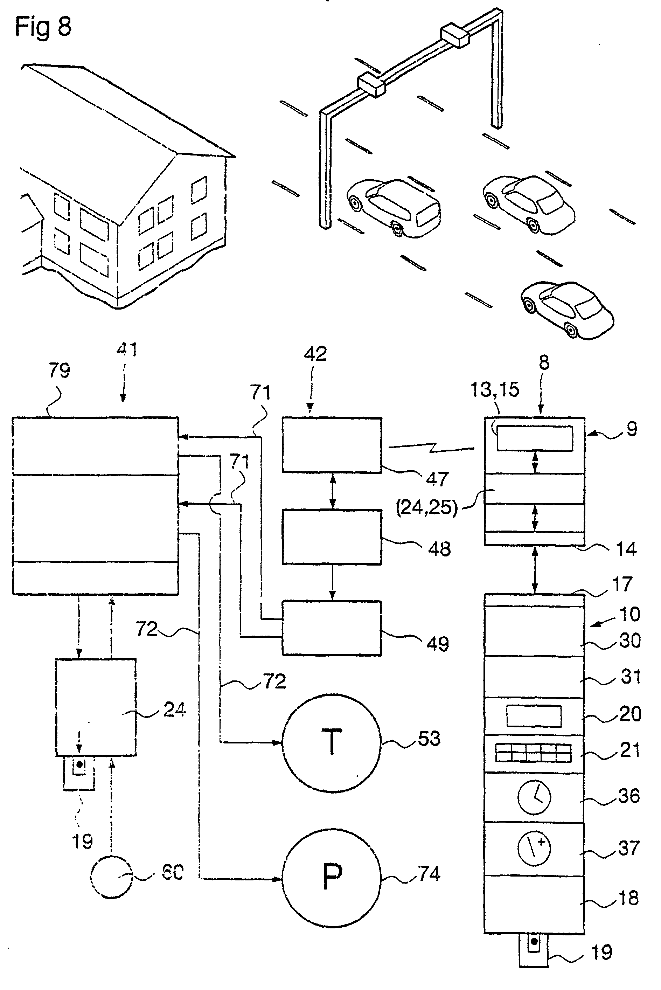

In the system embodiment according to Fig. 8 these circumstances have been considered. This is obtained by adding another unit to the service unit 10 of the vehicle equipment, the earlier mentioned time control unit 36. It comprises a timer device, a kind of stop clock, which registers time from a starting point to a stop point. Moreover, there is an operating means (the keypad 21 in Fig. 4) and the unit is connected to the rest of the vehicle equipment, thus its communication unit 9, the transponder 13, the memory- and data processing units, the display unit 20 and preferably the equipment is also provided with a card reading unit for the smart card 19. The manner of operation is the following:
1. When passing the entrance and exit tolls, respectively, the system operates as has been described before, thus charging of the prescribed charge in one of the payment systems, preferably by using smart cards. In parking on a charged parking place the time measuring device in the timer unit 36 is started manually by means of the operating means 21 of the service unit 10 in order to count down parking time and the corresponding subtraction of the resulting charge according to the charge, which is valid for the specific parking place. The operating means are suitably arranged for setting this rate, so that an adequate charge calculation takes place. At the exit the time measuring device is stopped and the charge substraction is stopped.
2. At exit from the parking place a stationary installation 42 is passed and via radio communication information is transferred regarding the subtracted charge. Suitably this subtraction has been transferred from the smart card, in the case where it is used, to the memory 31 for communicating the corresponding code to the stationary installation.
3. From the stationary installation information is communicated to the charging unit, in Fig. 8 denoted by the numeral 79. It is then indicated where the information has been collected so that it can be accounted with an address of the correct payment receiver. This multi-stage payment process is indicated by the arrows 71 in Fig. 8. The payment unit 79 is thus arranged to have different receiving accounts, of which has been assigned to the parking company (P), which is responsible for the parking place in question.

The timer unit can also be used if one wishes to debit a time dependent charge for a trip inside a certain zone, whereas for parking a parking charge is collected instead and an unintentional stop or parking on one's own place is not charged at all. The time measuring device is then connected to be started by an radio pulse received by the transponder 13 when passing a toll into the area that is subject to charges. The operation of the time measuring device is then controlled by the means 37, for sensing whether the vehicle is moving or not. In movement the charge shall hence be debited according to the total time used for the movement. At exit a stop of the time measuring device, also during the movement of the vehicle, is initiated by means of radio communication via the transponder.

In parking on a charged parking place it has here been assumed that it is up to the vehicle driver to start the timer for debiting the charge. This arrangement presupposes that a checking is provided that the timer really has been started after parking. Such checking has in earlier parking systems been performed by parking inspectors, checking that the parking meters are started or that tickets are bought and placed in the car or that a P-box is started respectively. In the present complete system there is a possibility to program the transponder to respond to a question code in remote transfer by indicating the state of operation existing for the timer and which charge has been set. This results in practice in that the parking inspector can have a transmitter/receiver equipment, which at periodic intervals are activated towards the parked vehicles and which directly in the apparatus provides an indication whether a correct state of operation exits.

In the preceding it has been described how the simplest form of vehicle equipment, the communication unit 9, yet enabling a debiting of charges when passing a stationary installation by means of remote communication (Figs. 5 and 6) successively can be extended for a successive higher degree of anonymity and for a more and more advanced charging system to a final form, see Fig. 8, where all types of charges, such as zone charges of different kinds for entrance, for movement inside the zone and passing by means of remote communication combined with time measurements in the vehicle equipment. In order to achieve it all components in the vehicle equipment must be designed to be able to co-operate with each other in different combinations. Communication channels are then required, which can be arranged in an all round manner and corresponding connection terminals on the different components.

It is thus the main principles of the invention, that departing from a simple unit that still is functional in a limited degree of service, foresee the components, which are required for the possible, successive expansion to a complete vehicle equipment for a number of cases of use and then adapt each unit and component for connection to the other ones. Physically this means that each unit must be provided with connection means, interfaces, and that each has such a function that they can cooperate with the other components foreseen in the complete system based on a common, coded communication protocol. Moreover, connection lines shall be arranged, which can have different shapes depending on the outer shape of the vehicle equipment. One can contemplate that all components can be built together by means of piling on each other and a successive direct connection. However, the always present transponder 13 in the communication unit 9 should be located in the vehicle on a place suitable for radio communication, preferably at the top side of the windshield. The rest of the equipment, in particular the card reader 18 and the service unit 10 together with its operating means shall be located inside a comfortable reach of the driver and a display of the unit including the character window 20 shall be located in order to be read comfortably. These conditions result in that the expanded equipment in the most advantageous case is divided in at least two units, as is shown in Fig. 1 and 2, the communication unit having said location and the service unit 10 that is reachable and visible from the driver's seat. For such a division a longer internal communication link is required. This can as has been mentioned be constituted of a wire connection or of a wireless connection.

Concerning the stationary installations, they shall always comprise the radio transmitter and receiver equipment 47, the data processing unit 48 and the communication unit 49, which is connected to the payment unit 41. In addition computer programming for the type or types of payment operations, which is to be performed, is required.

The payment unit 41, can, as has appeared, be organised for accounting of one or several payment receivers depending on the stationary units, which are to served. When connecting road tolls, city tolls and parking arrangements the payment receivers are often differentiated, which must be considered in the organisation of the payment unit.

In the description made here it has been assumed that the two units of the device are mounted in the vehicle as additional equipment. Within the scope of the invention it can however also be possible that at least some vehicles already in the manufacturing are equipped with units of this kind and are divided into communication units and service units having an intermediate link. It is then possible that the service unit is connected to other functional units, which are to present within operating distance from the driver and be possible to be watched by him/her. As an example of such equipment a sound installation and navigation apparatus can be mentioned.

The term link has here been used for the means of communication between the communication unit and one or several service units and it has been mentioned that this link can be arranged for wired communication or wireless communication. The term link shall then not be interpreted as denoting a long distance transfer. Even if the two units are mounted very close to each other the advantage remains, including the expansion and modification abilities of the device. However, as has been pointed out, a division as to the location is advantageous bearing in mind the respective functional areas of the communication unit and the service unit. It can then expressed by saying that the communication unit is specific to vehicle having the task of communicating vehicle information to the surrounding world whereas the service unit is driver specific for communication with the driver and further communication with the communication unit. The service unit can then also be person dedicated by means of individual intelligent cards.

## Claims

1. A vehicle carried device for remote communication in traffic checking systems comprising a communication unit (9) equipped with a transmitter and receiver equipment, preferably in the shape of a transponder (13) for radio waves in order to communicate with a number of external, preferably stationary transmitter and receiver equipments (42) for carrying out operations, in particular payment operations, which are to be registered, said communication unit (9) being located in the vehicle at a location advantageous for radio communication, such as the upper edge of the windshield of the vehicle, **characterized in that** the communication unit (9) is provided with a connection device (14) for internal signal transmission in the vehicle for connection of at least one service unit (10) separate from the communication unit and provided with data processing equipment arranged for such signal processing, that said internal signal transmissions between the communication unit (9) and said service unit (10) can be carried out.

2. A vehicle carried device according to claim 1, **characterized in that** the service unit (10) is provided with means (18, 21) for manual operation and means (20) for providing information such as by means of a character window, the at least one service unit (10) being intended to be located in the vehicle inside a suitable operation and viewing distance from the driver of the vehicle and then provided with at least one connection device (17) arranged to be connected by means of a link to the communication unit (9) and/or in occurring cases to the service units.

3. A vehicle carried device according to claim 1 or 2, **characterized in that** the at least one service unit (10) is provided with a connection device (18) for a separate carrier of data processing equipment and memory such as in the shape of an intelligent card (19) and also in the service unit a data processing equipment (30) having a memory (31), the data processing equipment being arranged to communicate and process data to and from the communication unit (9) and to and from the separate carrier (19), the data processing equipment being programmed to participate in the control of the transmitter and receiver equipment of the communication unit.

4. A vehicle carried device according to claim 3, **characterized in that** the separate carrier (19) is arranged to be programmed with prepaid amounts forming a balance and that the data processing equipment of the carrier and service unit (10) are arranged to debit an amount from the balance, which by means of data transfer has been debited via said external transmitter and receiver equipment (42) through the communication unit (9), such as toll and parking charges.

5. A vehicle carried device according to claim 3 or 4, **characterized in that** the service unit (10) is provided with a timer unit (36), the timer unit being arranged to control down counting of time from a start time to stop time according to a programmed hour charge, the service unit being arranged to preferably together with the separate carrier (19) complete debiting by means of debit from the balance communicated from the carrier when the debit period between the start and stop time has ended.

6. A vehicle carried device according to claim 5, **characterized in that** the service unit (10) is provided with operating means (21) for start and stop of the count down of time of the clock for debiting, and means for setting the hour charge.

7. A vehicle carried device according to claim 6, **characterized in that** the service unit 10 is arranged to via the communication unit (9) receive signals from the exterior transmitter and receiver equipment (42), which signals are arranged for start and stop of the count down of the clock and for setting of an hour charge at the entrance of the vehicle inside the range of the exterior transmitter and receiver equipment.

8. A vehicle carried device according to any of the preceding claims, **characterized in that** the link for signal transmission between the connection terminal (26) of the communication unit and the connection terminals (32) of the service unit or units (10) and/or in the respective cases between different service units are provided with means for wireless transmission.

9. A vehicle carried device according to claim 8, **characterized in that** the link or links are provided with means for wireless transmission by means of code pulses or infrared light.

10. A vehicle carried device according to any of the preceding claims, **characterized in that** the service unit (10) and/or some of the service units, receptively, are connected to a main power supply to be supplied with power, preferably the electrical network of the vehicle and that the communication unit (9) and/or in respective cases additional service units constitute power receiving units, which are power supplied from said service unit, to the main power supply connected by means of wireless power transmission.

11. A system comprising a vehicle carried device according to any of claims 1-10 for the collecting traffic charges by means of remote communication between stationary installations (42) and vehicle carried equipment (8) in traffic check installations, each stationary installation (42) comprising at least one unit (47) for transmission and reception of radio waves, at least one data processing unit (48) and at least one communication unit (49) for communication with payment units (52, 59, 78, 79) for the registration and distribution of collected charges and with each of the vehicle units (8) comprising at least one communication unit (9) having a transponder (13), the stationary installation being arranged to transmit encoded radio messages directed to occurring vehicle equipments to be received by the transponders thereof, which is programmed to retransmit a response message to the stationary installation receiver in question, **characterized in that** the communication unit (9) having said transponder (13) is arranged to be part of a component system for assembling a vehicle equipment (8), which except the communication unit (9), comprising the transponder (13), comprises one or more separate service units (10) comprising components such as data processing unit (30), memory unit (31), display (20) comprising a character window, card reader (18) for smart cards (19), timer unit (36), motion detector (37) and operating unit (21), each of the components being arranged to co-operate with the other components and being provided with connection devices (26), (32) for mutual signal communication so that the vehicle device successively can be adapted to different types of payment operation and different methods of payment, such as payment of charge for passing a road section, for entrance and staying in a traffic intense area and charges for parking, occurring stationary installations (32) comprising a possibility of programming for the different payment operations and charging cases, which can be comprised by the foreseen basic design and extension designs (Figs. 5-8) of the vehicle equipments.

12. A system according to claim 11, **characterized in that** for the function of collecting and checking parking charges the timer unit (36) is provided with operating means (21) for start and stop of a timer unit, and for the setting of present parking charge and so connected to the rest of the vehicle equipment including its transponder (13), that the setting and temporary function of the timer unit are possible to be remotely read via the communication unit, so that it hereby can be checked whether the correct parking function is present at the time considered by means of a special transmitter and receiver device, preferably a mobile one.

13. A system according to claim 12, **characterized in that** the timer unit (36) is arranged, as to its stop function/start function, to be remotely controlled via the communication unit (9) such as by means of a stationary installation (42) at exit from and/or entrance to a parking area.

14. A system according to claims 12 or 13, **characterized in that** the timer unit (36) further, as to its start and stop function, is arranged to be controlled by a device (37), which senses whether the vehicle, in which the unit is located, is moving or not.

## Patentansprüche

1. Fahrzeugmitgeführte Einrichtung zur Fernkommunikation in Verkehrskontrollsystemen, die umfassen: eine mit einem Sender und einem Empfänger ausgerüstete Kommunikationseinheit (9), vorzugsweise in Form eines Transponders (13) für Funkwellen um mit einer Anzahl externer, vorzugsweise stationärer Sender- und Empfängereinrichtungen (42) zu kommunizieren zum Durchführen von Vorgängen, insbesondere Bezahlvorgängen, die zu registrieren sind, wobei die Kommunikationseinheit (9) in dem Fahrzeug an einem für Funkkommunikation vorteilhaften Ort wie z. B. dem oberen Rand der Windschutzscheibe des Fahrzeugs angeordnet ist, **dadurch gekennzeichnet, dass** die Kommunikationseinheit (9) mit einer Verbindungseinrichtung (14) für interne Signalübertragung in dem Fahrzeug zum Verbinden mindestens einer Serviceeinheit (10) versehen ist, die von der Kommunikationseinheit getrennt ist und mit einer Datenverarbeitungsausrüstung versehen ist, die für solche Signalverarbeitung vorgesehen ist, dass die interne Signalübertragung zwischen der Kommunikationseinheit (9) und der Service-Einheit (10) ausgeführt werden kann.

2. Fahrzeugmitgeführte Einrichtung nach Anspruch 1, **dadurch gekennzeichnet, dass** die Service-Einheit (10) mit einer Vorrichtung (18, 21) für manuellen Betrieb ausgerüstet ist und mit einer Vorrichtung (20) zum Bereitstellen von Information wie z. B. mit Hilfe eines Zeichenfensters, und mit mindestens einer Service-Einheit (10), die gedacht ist, um in dem Fahrzeug innerhalb eines geeigneten Operations- und Sichtabstandes vom Fahrer des Fahrzeugs angeordnet zu werden und dann mit mindestens einer Verbindungseinrichtung (17) versehen ist, die angeordnet ist, um mit Hilfe einer Verbindung zur Kommunikationseinheit (9) verbunden zu sein und/oder gegebenenfalls zu den Service-Einheiten.

3. Fahrzeugmitgeführte Einrichtung nach Anspruch 1 oder 2, **dadurch gekennzeichnet, dass** die mindestens eine Service-Einheit (10) mit einer Verbindungseinrichtung (18) versehen ist für einen getrennten Datenverarbeitungsausrüstungs- und Speicherträger wie z. B. in Form einer intelligenten Karte (19) und auch in der Service-Einheit eine Datenverarbeitungsausrüstung (30) mit einem Speicher (31), wobei die Datenverarbeitungsausrüstung angeordnet ist zum Kommunizieren und Verarbeiten von Daten zu und von der Kommunikationseinheit (9) und zu und von dem separaten Träger (19), und wobei die Datenverarbeitungsausrüstung programmiert ist zum Teilhaben an der Steuerung der Sender- und Empfängerausrüstung der Kommunikationseinheit.

4. Fahrzeugmitgeführte Einrichtung nach Anspruch 3, **dadurch gekennzeichnet, dass** der separate Träger (19) angeordnet ist, um programmiert zu werden mit vorbezahlten Beträgen, die einen Saldo bilden und dass die Datenverarbeitungsausrüstung des Trägers und der Service-Einheit (10) angeordnet sind, um einen Betrag von dem Saldo abzubuchen, der mit Hilfe einer Datenübertragung belastet worden ist über die externe Sender- und Empfängerausrüstung (42) durch die Kommunikationseinheit (9), wie z. B. Maut- und Parkkosten.

5. Fahrzeugmitgeführte Einrichtung nach Anspruch 3 oder 4, **dadurch gekennzeichnet, dass** die Service-Einheit (10) mit einer Zeitgebereinheit (36) versehen ist, die Zeitgebereinheit angeordnet ist zum Steuern des Abwärtszählens von Zeit von einer Startzeit zu einer Stopzeit entsprechend einer programmierten Stundengebühr, die Service-Einheit angeordnet ist, um vorzugsweise gemeinsam mit dem separaten Träger (19) den Buchungsvorgang mit Hilfe des Abbuchens von dem Saldo, das von dem Träger kommuniziert worden ist, abzuschließen, wenn die Abbuchungsperiode zwischen der Startzeit und der Stopzeit geendet hat.

6. Fahrzeugmitgeführte Einrichtung nach Anspruch 5, **dadurch gekennzeichnet, dass** die Service-Einheit (10) mit einer Operationsvorrichtung (21) versehen ist zum Starten und Stoppen des Abwärtszählens der Zeit der Uhr für ein Abbuchen und einer Vorrichtung zum Einstellen der Stundengebühr.

7. Fahrzeugmitgeführte Einrichtung nach Anspruch 6, **dadurch gekennzeichnet, dass** die Service-Einheit (10) angeordnet ist, um über die Kommunikationseinheit (9) Signale von der externen Sender- und Empfängerausrüstung (42) zu erhalten, welche Signale zum Starten und Stoppen des Abwärtszählens der Uhr und zum Einstellen einer Stundengebühr beim Eintritt des Fahrzeugs in den Bereich der externen Sender- und Empfängerausrüstung vorgesehen sind.

8. Fahrzeugmitgeführte Einrichtung nach einem der vorhergehenden Ansprüche, **dadurch gekennzeichnet, dass** die Verbindung für Signalübertragung zwischen dem Verbindungsanschluss (26) der Kommunikationseinheit und den Verbindungsanschlüssen (32) der Service-Einheit oder Einheiten (10) und/oder in den jeweiligen Fällen zwischen unterschiedlichen Service-Einheiten mit Vorrichtungen zur drahtlosen Übertragung versehen sind.

9. Fahrzeugmitgeführte Einrichtung nach Anspruch 3, **dadurch gekennzeichnet, dass** die Verbindung oder die Verbindungen mit Vorrichtungen zur drahtlosen Übertragung bereitgestellt werden mit Hilfe von Code-Puls- oder Infrarotlicht.

10. Fahrzeugmitgeführte Einrichtung nach einem der vorhergehenden Ansprüche, **dadurch gekennzeichnet, dass** die Service-Einheit (10) und/oder einige der Service-Einheiten jeweils mit einer Hauptenergieversorgung verbunden sind, um mit Energie versorgt zu werden, vorzugsweise dem elektrischen Netz des Fahrzeugs und dass die Kommunikationseinheit (9) und/oder in jeweiligen Fällen zusätzlich Service-Einheiten Energieempfangseinheiten bilden, die mit Energie versorgt werden von dieser Service-Einheit, mit der Hauptenergieversorgung verbunden mit Hilfe von Drahtlos-Energieübertragung.

11. System, eine fahrzeugmitgeführte Einrichtung nach einem der Ansprüche 1-10 umfassend zum Sammeln von Verkehrsgebühren mit Hilfe von Fernkommunikation zwischen stationären Installationen (42) und fahrzeugmitgeführter Ausrüstung (8) in Verkehrskontrollinstallationen, wobei jede stationäre Installation (42) mindestens eine Einheit (47) umfasst zum Senden und Empfangen von Funkwellen, mindestens eine Datenverarbeitungseinheit (48) und mindestens eine Kommunikationseinheit (49) zur Kommunikation mit Bezahleinheiten (52, 59, 78, 79) zum Registrieren und Verteilen von eingesammelten Gebühren und wobei jede der Fahrzeugeinheiten (8) mindestens eine Kommunikationseinheit (9) umfasst mit einem Sender (13), die stationäre Installation angeordnet ist zum Senden codierter Funkmeldungen, die auf auftauchende Fahrzeugausrüstungen gerichtet sind, um von den Transpondern davon empfangen zu werden, welche programmiert sind zum Zurücksenden einer Antwortmeldung an den fraglichen stationären Installationsempfänger, **dadurch gekennzeichnet, dass** die Kommunikationseinheit (9), die den Transponder (13) hat, angeordnet ist, um ein Teil eines Komponentensystems zu sein zum Zusammenbauen einer Fahrzeugausrüstung (8), die mit Ausnahme der den Transponder (13)umfassenden Kommunikationseinheit (9) einen oder mehrere getrennte Service-Einheiten (10) umfasst, welche Komponenten wie z. B. Datenverarbeitungseinheit (39), Speicher (31), Anzeige (20) einschließlich eines Zeichenfensters, einen Kartenleser (18) für Smart-Cards (19), eine Zeitgebereinheit (36), einen Bewegungsdetektor (37) und eine Operationseinheit (21) umfasst, wobei jede der Komponenten angeordnet ist, um mit den anderen Komponenten zu kooperieren und mit Verbindungseinrichtungen (26), (32) versehen ist zur gegenseitigen Signalkommunikation, so dass die Fahrzeugeinrichtung sukzessive angepasst werden kann an unterschiedliche Arten von Bezahlvorgängen und unterschiedliche Verfahren des Bezahlens wie z. B. Bezahlen von Gebühren für das Passieren eines Straßenabschnittes, für das Eindringen in einen und Verweilen in einem Bereich hohen Verkehrsaufkommens und Parkgebühren, wobei auftretende stationäre Installationen (32) eine Möglichkeit umfassen des Programmierens für die unterschiedlichen Bezahlvorgänge und Abbuchungsfälle, die eingeschlossen sein kann in der vorgesehenen Grundanordnung und in Erweiterungsanordnungen (Fig. 5-8) der Fahrzeugausrüstungen.

12. System nach Anspruch 11, **dadurch gekennzeichnet, dass** für die Funktion des Sammelns und Kontrollierens von Parkgebühren die Zeitgebereinheit (36) mit einer Operationssvorrichtung (21) versehen ist zum Starten und Stoppen einer Zeitgebereinheit und für das Einstellen vorliegender Parkgebühr und derart verbunden mit dem Rest der Fahrzeugeinrichtung einschließlich seinem Transponder (13), dass die Einstellung und temporäre Funktion der Zeitgebereinheit in der Lage sind, von ferne über die Kommunikationseinheit gelesen zu werden, so dass hierdurch mit Hilfe einer Spezialsender- und Empfängereinrichtung, vorzugsweise einer mobilen, kontrolliert werden kann, ob die korrekte Parkfunktion zur betrachteten Zeit vorliegt.

13. System nach Anspruch 12, **dadurch gekennzeichnet, dass** die Zeitgebereinheit (36) bezüglich ihrer Stopfunktion/Startfunktion vorgesehen ist, um ferngesteuert zu werden über die Kommunikationseinheit (9) wie mit Hilfe einer stationären Installation (42) am Ausgang von/oder am Eingang zu einem Parkbereich.

14. System nach Anspruch 12 oder 13, **dadurch gekennzeichnet, dass** die Zeitgebereinheit (36) außerdem bezüglich ihrer Start- und Stopfunktion angeordnet ist, um von einer Einrichtung (37 gesteuert zu werden), die fühlt, ob das Fahrzeug, in dem die Einheit angeordnet ist, sich in Bewegung befindet oder nicht.

## Revendications

1. Appareil porté par un véhicule, destiné à communiquer à distance avec des systèmes de vérification de circulation, comprenant une unité (9) de communication équipée d'un équipement émetteur et récepteur, de préférence sous forme d'un émetteur-récepteur (13) d'ondes radioélectriques destiné à communiquer avec un certain nombre d'équipements émetteurs et récepteurs externes (42), fixes de préférence, pour l'exécution d'opérations, en particulier d'opérations de paiement, qui doivent être enregistrées, l'unité de communication (9) se trouvant sur le véhicule à un emplacement avantageux pour les communications radioélectriques, tel qu'au bord supérieur du pare-brise du véhicule, **caractérisé en ce que** l'unité de communication (9) comporte un appareil de connexion (14) permettant une transmission interne de signaux dans le véhicule pour la connexion d'au moins une unité de service (10) séparée de l'unité de communication et comportant un appareillage de traitement de données destiné à ce traitement de signaux, afin que les transmissions internes des signaux puissent être réalisées entre l'unité de communication (9) et l'unité de service (10).

2. Appareil porté par un véhicule selon la revendication 1, **caractérisé en ce que** l'unité de service (10) comporte un dispositif (18, 21) destiné à une manoeuvré manuelle, et un dispositif (20) destiné à donner des informations, par exemple par une fenêtre d'affichage de caractères, l'unité de service au moins (10) étant destinée à être placée dans le véhicule à l'intérieur à une distance convenable de manoeuvre et d'observation du conducteur de véhicule et ayant au moins un dispositif de connexion (17) destiné à être connecté par une liaison à l'unité de communication (9) et/ou le cas échéant à des unités de service.

3. Appareil porté par un véhicule selon la revendication 1 ou 2, **caractérisé en ce que** l'unité de service au moins (10) est munie d'un dispositif de connexion (18) destiné à un support séparé d'appareillage de traitement de données, et d'une mémoire, par exemple sous forme d'une carte intelligente (19), et, aussi dans l'unité de service, d'un équipement de traitement de données (30) ayant une mémoire (31), l'équipement de traitement de données étant destiné à communiquer des données échangées avec l'unité de communication (9) et avec le support séparé (19) et à traiter ces données, l'équipement de traitement de données étant programmé afin qu'il participe à la commande de l'appareillage émetteur et récepteur de l'unité de communication.

4. Appareil porté par un véhicule selon la revendication 3, **caractérisé en ce que** le support séparé (19) est destiné à être programmé par des sommes prépayées formant un solde, et **en ce que** l'équipement de traitement de données du support et l'unité de service (10) sont disposés afin qu'ils débitent une somme du solde qui, à l'aide d'un transfert de données, a été débité par l'intermédiaire de l'équipement externe émetteur et récepteur (42) par l'intermédiaire de l'unité de communication (9), telle que pour un péage et des paiements de stationnement.

5. Appareil porté par un véhicule selon la revendication 3 ou 4, **caractérisé en ce que** l'unité de service (10) comporte une unité à minuterie (36), l'unité à minuterie étant destinée à commander le décomptage du temps depuis un temps initial jusqu'à un temps d'arrêt en fonction d'une facturation horaire programmée, l'unité de service étant associée de préférence au support séparé (19) pour effectuer le débit par débit du solde communiqué par le support lorsque la période de débit entre le temps initial et le temps d'arrêt est terminé.

6. Appareil porté par un véhicule selon la revendication 5, **caractérisé en ce que** l'unité de service (10) comporte un dispositif opérationnel (21) destiné à lancer et interrompre le décomptage du temps de l'horloge pour le débit, et un dispositif destiné à établir la facturation horaire.

7. Appareil porté par un véhicule selon la revendication 6, **caractérisé en ce que** l'unité de service (10) est disposée de manière que, par l'intermédiaire de l'unité de communication (9), elle reçoive des signaux de l'équipement émetteur et récepteur extérieur (42), ces signaux étant destinés à provoquer le lancement et l'interruption du décomptage de l'horloge et à établir une facturation horaire à l'entrée du véhicule dans la portée de l'appareillage extérieur émetteur et récepteur.

8. Appareil porté par un véhicule selon l'une quelconque des revendications précédentes, **caractérisé en ce que** la liaison de transmission de signaux entre la borne de connexion (26) de l'unité de communication et les bornes de connexion (32) de l'unité ou des unités de service (10) et/ou dans des cas respectifs entre des unités différentes de service, est réalisée par transmission sans fil.

9. Appareil porté par un véhicule selon la revendication 8, **caractérisé en ce que** la liaison ou les liaisons sont formées par transmission sans fil à l'aide d'impulsions codées ou de lumière infrarouge.

10. Appareil porté par un véhicule selon l'une quelconque des revendications précédentes, **caractérisé en ce que** l'unité de service (10) et/ou certaines des unités de service respectivement, sont connectées à une alimentation principale destinée à recevoir de l'énergie, de préférence du circuit électrique du véhicule, et l'unité de communication (9) et/ou des unités supplémentaires de service dans des cas respectifs constituent des unités réceptrices d'énergie qui sont alimentées en énergie par l'unité de service reliée à l'alimentation principale connectée par transmission d'énergie sans fil.

11. Système comprenant un appareil porté par un véhicule selon l'une quelconque des revendications 1 à 10, destiné à collecter des facturations de circulation par communication à distance entre des installations fixes (42) et un appareillage (8) porté par un véhicule dans des installations de vérification de circulation, chaque installation fixe (42) comprenant au moins une unité (47) destinée à transmettre et recevoir des ondes radioélectriques, au moins une unité de traitement de données (48) et au moins une unité de communication (49) destinée à communiquer avec des unités de paiement (52, 59, 78, 79) pour l'enregistrement et la distribution des sommes facturées collectées et avec chacune des unités de véhicule (8) contenant au moins une unité de communication (9) munie d'un émetteur-récepteur (13), l'installation fixe étant destinée à transmettre des messages radioélectriques codés dirigés vers les équipements de véhicules qui apparaissent afin qu'ils soient reçus par leur émetteur-récepteur, et étant programmée pour retransmettre un message de réponse vers le récepteur de l'installation fixe concernée, **caractérisé en ce que** l'unité de communication (9) ayant l'émetteur-récepteur (13) est disposée afin qu'elle fasse partie d'un système d'éléments pour l'assemblage d'un appareillage (8) de véhicule qui, à l'exception de l'unité de communication (9) comprenant l'émetteur-récepteur (13), comporte une ou plusieurs unités séparées de service (10) comprenant des éléments tels qu'une unité de traitement de données (30), une unité de mémoire (31), une unité d'affichage (20) ayant une fenêtre d'affichage de caractères, un lecteur de cartes (18) destiné à des cartes à puce (19), une unité à minuterie (36), un détecteur de mouvement (37) et une unité opérationnelle (21), chacun des éléments étant disposé afin qu'il coopère avec les autres éléments et comportant des dispositifs de connexion (26, 32) destinés à assurer la communication mutuelle des signaux afin que l'appareil du véhicule puisse être adapté successivement à différents types d'opérations de paiement et différents procédés de paiement, tels qu'un paiement pour la facturation au passage sur un tronçon de route, pour l'entrée et le stationnement dans une zone de circulation intense et des sommes facturées pour le stationnement, les installations fixes (32) comprenant une possibilité de programmation pour les différentes opérations de paiement et pour les différents cas de facturation qui peuvent être compris par les réalisations de conception et d'extension fondamentales prévues (figures 5 à 8) des équipements de véhicules.

12. Système selon la revendication 11, **caractérisé en ce que**, pour la collecte et la vérification des facturations de stationnement, l'unité à minuterie (36) comporte un dispositif opérationnel (21) destiné à lancer et arrêter une unité à minuterie, et à établir une facturation actuelle de stationnement, et connecté au reste de l'appareillage du véhicule qui comprend un émetteur-récepteur (13) de manière que le réglage et le fonctionnement temporaire de l'unité à minuterie puissent être lus à distance par l'unité de communication, si bien qu'elle peut vérifier si une fonction convenable de stationnement est exécutée au moment considéré par l'appareil spécial à émetteur et récepteur, de préférence de type mobile.

13. Système selon la revendication 12, **caractérisé en ce que** l'unité à minuterie (36) est destinée, par sa fonction d'arrêt et de lancement, à être commandée à distance par l'intermédiaire de l'unité de communication (9), par exemple par une installation fixe (42) placée à la sortie et/ou à l'entrée d'une zone de stationnement.

14. Système selon la revendication 12 ou 13, **caractérisé en ce que** l'unité à minuterie (36), par sa fonction de lancement et d'arrêt, est en outre destinée à être commandée par un appareil (37) qui détecte si le véhicule dans lequel se trouve l'unité est en mouvement ou non.
